# EUROPEAN PATENT SPECIFICATION

(11) **EP 3 184 818 B1**
(45) Date of publication and mention of the grant of the patent: **03.06.2020**
(21) Application number: 14900134.9
(22) Date of filing: 28.08.2014
(51) Int. Cl.: F04B 35/04, F04B 35/06, F04B 39/14

(54) **PORTABLE AIR COMPRESSOR WITH DETACHABLE MULTIFUNCTIONAL START POWER SOURCE**
TRAGBARER LUFTKOMPRESSOR MIT ABNEHMBARER MULTIFUNKTIONSSTARTSTROMQUELLE
COMPRESSEUR D' AIR PORTABLE COMPRENANT UNE SOURCE D'ÉNERGIE DE DÉMARRAGE MULTIFONCTIONNELLE DÉTACHABLE

(30) Priority: 19.08.2014 CN 201410408296
(43) Date of publication of application: 28.06.2017
(73) Proprietor: Dongguan Richtek Electronics Co., Ltd., Dongguan, Guandong 523651 (CN)
(72) Inventor: YANG, Ken, Dongguan Guangdong 523651 (CN)
(74) Representative: Handsome I.P. Ltd
(86) International application number: PCT/CN2014/085453
(87) International publication number: WO 2016/026164

(56) References cited:
- CN-A- 102 046 465
- CN-A- 103 094 958
- CN-U- 201 635 954
- CN-U- 202 673 611
- CN-U- 203 660 619
- CN-Y- 2 680 894
- JP-A- S6 483 884
- KR-B1- 100 854 777
- US-A- 5 127 808

## Description

### TECHNICAL FIELD

The present application belongs to the technical field of portable air compressors, and particularly relates to a portable air compressor with a detachable multi-functional start power supply.

### BACKGROUND

With the improvement of living quality, portable air compressors have been increasingly applied to daily life, for example, for inflating tires of bicycles and vehicles, and inflating airbeds, air seats and the like in a camping trip. Multi-functional portable power supplies are one of necessary apparatus when going out. At present, multi-functional portable power supplies capable of providing a plurality of voltages are available. This kind of portable power supplies can not only provide power to electronic devices, but also serve as a start power supply for vehicle batteries. However, people always tend to carry objects as few as possible for outdoor activities. Accordingly, portable air compressors and multi-functional portable power supplies are being developed in a tendency of portability and universality.

Among the existing portable air compressors, hand-held air compressors are used extensively. However, such hand-held air compressors occupy a relatively large space, and are thus inconvenient to carry. Currently, there are box-shaped miniature portable air compressors, which are compact in structure and convenient to carry and occupy a small space. Such box-shaped miniature portable air compressors mainly comprise two types: box-shaped miniature portable air compressors with batteries and direct plug-in box-shaped miniature portable air compressors. With regard to a miniature portable air compressor with batteries, the operating power thereof is provided by the batteries. However, the electric capacity of the batteries is limited, and such limitation is disadvantageous for long-time continuous operation of the air compressor and brings a relatively high application cost. With regard to compressors with batteries in the prior art, batteries are generally provided inside a housing of an air compressor, and the batteries must be used together with the air compressor. In contrast, with regard to a direct plug-in miniature air compressor, the operating power is supplied by a DC 12V power supply from an automobile cigarette lighter. Such a direct plug-in miniature air compressor has a high requirement on the occasion. In the absence of power supplied by a DC 12V from the automobile, the air compressor cannot be applied, and it is thus inconvenient for application. In addition, most of the portable air compressors in the prior art are simple in function, while products with diverse functions are inconvenient to carry and apply.

CN202673611U describes a compressor for vehicles with a built-in power supply. JPS6483884A discusses an electric fan with a removable battery. CN2680894 mentions an air pump that has a removable battery pack. CN203660619 discloses a power supply to which many devices can be attached.

### SUMMARY

The present application overcomes shortcomings in the prior art and provides a portable air compressor with a detachable multi-functional start power supply, the power of which can be supplied by a DC 12V from an automobile cigarette lighter and also by a multi-functional portable power supply. In addition, power can be provided to the multi-functional portable power supply by the DC 12V from the automobile cigarette lighter. This air compressor can meet various requirements from users due to its compact structure, convenient application and diverse function.

To solve the technical problems mentioned above, the present application employs the following technical solution.

A portable air compressor is provided, comprising an air compressor body, an air pump and a motor both provided inside and electrically connected to the air compressor body, and a power supply circuit; the portable air compressor further comprises a portable start power supply for vehicle batteries; wherein the power supply circuit comprises a circuit for the air compressor body, a consumption circuit for the portable power supply and a charging circuit for the portable power supply, with electrical connection structures being provided between the consumption circuit for the portable power supply and the circuit for the air compressor body and between the charging circuit for the portable power supply and the circuit for the air compressor body; characterised in that the portable power supply is detachable from, and mountable on, the air compressor body such that with the portable power supply mounted on the air compressor body, the consumption circuit for the portable power supply and the charging circuit for the portable power supply are electrically connected to the circuit for the air compressor body by the electrical connection structures, and with the portable power supply removed, the electrical connection structures are disconnected; further characterised in that a charging port and a consumption socket are provided on the portable power supply, and it is able to supply power of various voltages and currents.

Further, the electrical connection structure may comprise an elastic anode sheet, an elastic cathode sheet, an anode contact and a cathode contact, the elastic anode sheet being resisted against the anode contact and the elastic cathode sheet being resisted against the cathode contact.

Further, the air compressor body may be cube in shape, and the multi-functional portable power supply may be arranged at one end portion of the air compressor body.

Further, the multi-functional portable power supply and the air compressor body may form a slidable clamping structure.

Further, at least two shoulders may be provided oppositely at one end of the air compressor body; protrusions may be provided at interval on an inner side of the shoulder, blocks may be provided at interval on the multi-functional portable power supply correspondingly to the protrusions, and the portable power supply may be clamped on the air compressor body by the coordination between the blocks and the protrusions; and the elastic anode sheet and the elastic cathode sheet are in close contact with the anode contact and the cathode contact, respectively.

Further, a stopper for limiting the position of the multi-functional portable power supply may be provided at one end of the shoulder. Further, a locking mechanism for locking the multi-functional portable power supply may also be provided on the air compressor body. Further, an illuminating device may also be provided on the multi-functional portable power supply, an encoder knob may be provided on the illuminating device, and each stage of the encoder knob corresponds to light of different colours and brightness.

Further, an interface capable of acquiring electricity for a vehicle battery may be provided on the multi-functional potable power supply.

Further, the charging port may be a USB charging port, and the consumption socket may be a USB consumption socket. When compared with the prior art, the present application has the following advantageous effects.

Not only the DC 12V from the traditional automobile cigarette lighter may be used to supply power to the compressor and to charge the multi-functional portable power supply, but also the multi-functional portable power supply may be used to supply power to the air compressor. When the multi-functional portable power supply is removed, the electrical connection structures are disconnected. Here, the DC 12V from the automobile cigarette lighter may be used to supply power to the air compressor, which is very convenient for use. With regard to the present application, the portable power supply may be removed to be used to charge and discharge electricity separately without the circuit for the air compressor body. When combined with different voltage transformation circuits, it may also serve as different voltage power supplies, for example, portable power supplies for small electronic devices such as cell phones, laptops and the like, power supplies for vehicle batteries, or DC 12V power supply. When compared with the existing technology in which a consumption socket is provided on a housing of an air compressor and the battery is not detachable, the detached multi-functional portable power supply may be equivalent to a normal portable power supply in size. Such a multi-functional portable power supply may be small in volume, convenient to move and use, diverse in function and convenient to carry, and thus frees a user of the trouble to go everywhere with the ponderous power supply station. In this way, user experiences a more comfortable service, and carries fewer objects when going out. When it is used as a multi-functional portable power supply separately, the multi-functional start power supply may be charged by the charging port, and it is thus very convenient for use.

Apart from serving as a small power supply station for various power consumption devices, the multi-functional portable power supply may also acquire electricity for automobile batteries and supply power of various voltages and currents. In this way, multiple functions are integrated to the maximum, and it is thus extremely convenient for application.

An illuminating device may also be provided on the multi-functional start power supply. An encoder knob may be provided on the illuminating device, and stages of the encoder knob can be used to select indicator light (SOS, white light and red flash, et.al). The multi-functional portable power supply may serve as an illuminating device. The multi-functional portable power supply may be applied for multiple purposes, has multiple functions, and is convenient to carry.

### BRIEF DESCRIPTION OF THE DRAWINGS

The accompanying drawings are provided for further understanding of the present application, and explain the present application together with embodiments of the present application, instead of limiting the present application. In the accompanying drawings:
Fig. 1 is a schematic structure diagram of a portable air compressor with a detachable multi-functional start power supply according to Embodiment 1 of the present application;
Fig. 2 is a schematic structure diagram of the portable air compressor with a detachable multi-functional start power supply according to Embodiment 2 of the present application;
Fig. 3 is a schematic structure diagram of the portable air compressor with a detachable multi-functional start power supply according to Embodiment 2 of the present application, from another view;
Fig. 4 is a schematic structure diagram of the portable air compressor with a detachable multi-functional start power supply according to Embodiment 3 of the present application;
Fig. 5 is a schematic structure diagram of the portable air compressor with a detachable multi-functional start power supply according to Embodiment 3 of the present application, from another view; and
Fig. 6 is a schematic structure diagram of the portable air compressor with a detachable multi-functional start power supply according to Embodiment 4 of the present application, wherein:

- 10:: air compressor body;
- 11:: shoulder;
- 111:: protrusion;
- 112:: stopper;
- 121:: projection;
- 122:: connecting sheet;
- 131:: slider;
- 132:: position-limiting block;
- 133:: spring;
- 134:: slider hole;
- 135:: position-limiting hole;
- 141:: L-shaped hook;
- 142:: button;
- 143:: button hole;
- 20:: multi-functional portable power supply;
- 21:: block;
- 22:: groove;
- 23:: illuminating device;
- 24:: charging port;
- 25:: consumption socket; and
- 26:: L-shaped groove.

### DETAILED DESCRIPTION

The preferred embodiments of the present application will be described with reference to the accompanying drawings below. It should be understood that the preferred embodiments described here are merely used to describe and explain the present application and not intended to limit the present application.

### Embodiment 1

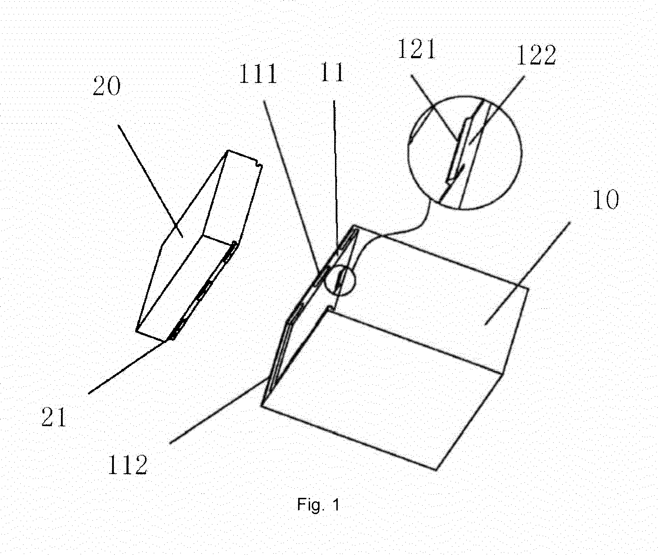

As shown in Fig. 1 , the portable air compressor with a multi-functional detachable start power supply according to the present application comprises an air compressor body 10 and an air pump and a motor (not shown in the drawing) both provided within the air compressor body 10 and electrically connected to each other, and a power supply circuit. A plug (not shown in the drawing) for connecting the DC 12V power supply is provided on the air compressor body 10 and can be connected to an automobile cigarette lighter. The power supply circuit comprises a circuit for the air compressor body, a consumption circuit for the multi-functional portable power supply 20 and a charging circuit for the portable power supply. A detachable multi-functional portable power supply 20 is also provided on the air compressor body 10. Electrical connection structures (not shown in the drawing) are provided between the charging circuit for the portable power supply and the circuit for the air compressor body 10 and between the consumption circuit for the portable power supply and the circuit for the air compressor body 10. The charging circuit for the portable power supply and the consumption circuit for portable power supply are electrically connected to the circuit for the air compressor body 10 by the electrical connection structures. When the multi-functional portable power supply 20 is mounted on the air compressor body 10, the consumption circuit for the portable power supply and the charging circuit for the portable power supply are electrically connected to the circuit for the air compressor body by the electrical connection structures, and when the multi-functional portable power supply 20 is removed, the electrical connection structures are disconnected.

The electrical connection structure comprises an elastic anode sheet and an elastic cathode sheet provided on the circuit for the air compressor body. An anode contact and a cathode contact are provided on the consumption circuit for the portable power supply and the charging circuit for the portable power supply, with the elastic anode sheep being resisted against the anode contact and the elastic cathode sheet being resisted against the cathode contact (not shown in the drawing).

As shown in Fig. 1, the air compressor body 10 is a cube in shape. The multi-functional portable power supply 20 is provided on one end of the air compressor body 10, and a new cube is formed after the multi-functional portable power supply 20 and the air compressor body 10 are combined.

The multi-functional portable power supply 20 and the air compressor body 10 form a slidable clamping structure. The structure is easy to be assembled and disassembled, and is thus convenient for use.

At least two shoulders 11 are provided oppositely at one end of the air compressor body 10; protrusions 111 are provided at interval on an inner side of the shoulder 11, blocks 21 are provided at interval on the multi-functional portable power supply 20 correspondingly to the protrusions 111, and the portable power supply 20 is clamped on the air compressor body 10 by the coordination between the blocks 21 and the protrusions 111; and the elastic anode sheet and the elastic cathode sheet are in close contact with the anode contact and the cathode contact, respectively. The plurality of protrusions 111 and blocks 21 form a plurality of support points for clamping, so that the multi-functional portable power supply 20 is fixedly and firmly clamped with the air compressor body 10. The electrical connection structure located on a contact surface between the multi-functional portable power supply 20 and the air compressor body 10 is especially in close contact, which ensures that the multi-functional portable power supply 20 and the circuit are in excellent contact.

A stopper 112 for limiting the position of the multi-functional portable power supply 20 is provided at one end of the two shoulders 11. The blocks 112 are configured to limit the position at which the multi-functional portable power supply 20 is slidingly inserted into the air compressor body 10.

A locking mechanism for locking the multi-functional portable power supply 20 is also provided on the air compressor body 10. The locking mechanism of present embodiment is formed of a protrusion 121 provided at and protruded from an end surface of the air compressor body 10 and a groove 22 provided on the multi-functional portable power supply 20. The protrusion 121 is connected to the air compressor body 10 by a connecting sheet 122 which can be elastically deformed. The connecting sheet 122 can be slightly deformed by an external force so that the protrusion 121 can be clamped into and removed from the groove 22.

The multi-functional portable power supply 20 can acquire electricity for a vehicle battery. High-current connecting wires specified for acquiring electricity for a vehicle battery is also provided on present device.

### Embodiment 2

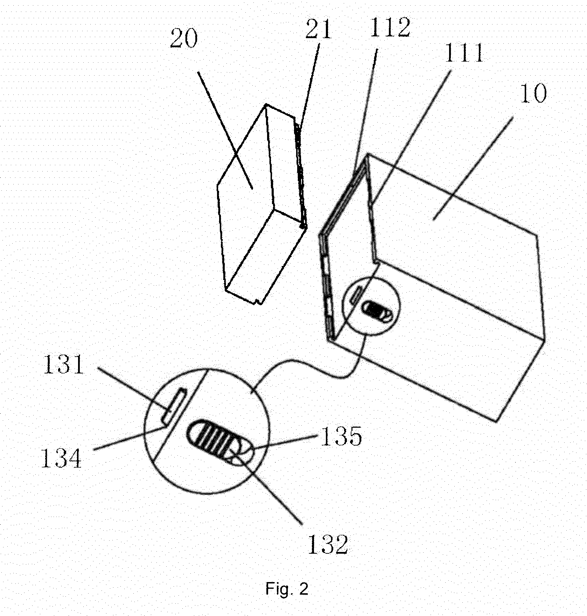

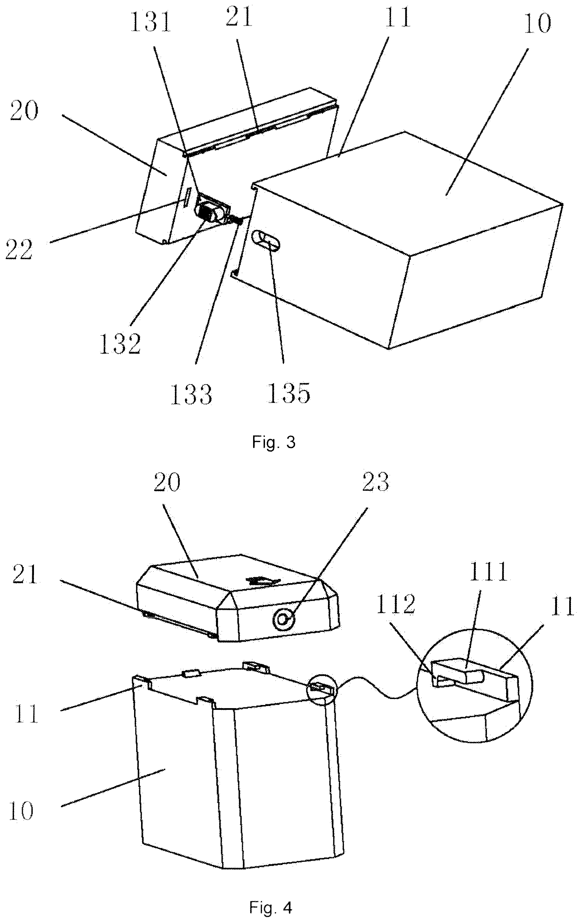

A main technical solution of present embodiment is the same as that of Embodiment 1. Features not explained in present embodiment will refer to those in Embodiment 1, and will not be repeated here. The difference between present embodiment and Embodiment 1 lies in that:
As shown in Fig. 2 and Fig. 3, the locking mechanism employed in present embodiment is formed of a slider 131 provided inside the air compressor body 10 and a spring 133 propping the slider 131, and also comprises a groove 22 formed on the multi-functional portable power supply 20. A position-limiting block 132 for limiting the position of the slider 131 is provided on the slider 131, and a slider hole 134 is formed on an end surface of the air compressor body 10. A position-limiting hole 135 is formed on a side of the air compressor body 10, and the position-limiting block 132 is provided inside the position-limiting hole 135. The slider 131 is provided inside the slider hole 134. The spring 133 is arranged on the bottom of the slider 131, and the slider 131 is pushed by the spring 133 to move along the slider hole 134. When locking and position-limiting are required, the spring 133 props up the slider 131 and the slider 131 is inserted into the groove 22 through the slider hole 134. When the multi-functional portable power supply 20 is detached, the position-limiting block 132 is moved toward the spring 133 with hands, and the slider 131 retracts from the inside of the groove 22. Here, the multi-functional portable power supply 20 can be detached by sliding the multi-functional portable power supply 20 away from the stopper 112.

### Embodiment 3

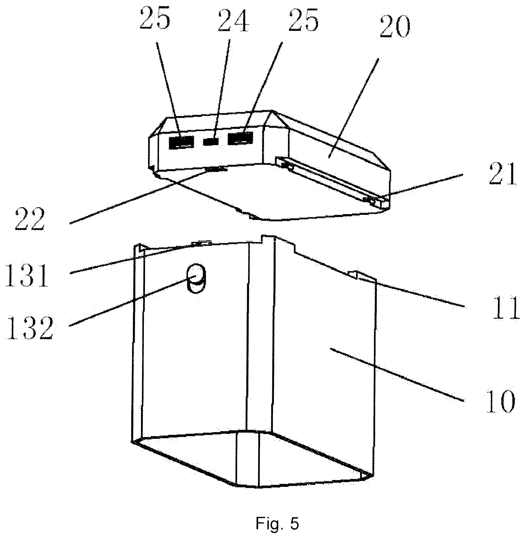

A main technical solution of present embodiment is the same as that of Embodiment 1. Features not explained in present embodiment will refer to those in Embodiment 1, and will not be repeated here. The difference between present embodiment and Embodiment 1 lies in that:
As shown in Fig. 4, an illuminating device 23 is also provided on the multi-functional portable power supply 20. An encoder knob is provided on the illuminating device 23, and stages of the encoder knob can be used to select indicator light (SOS, white light and red flash, et.al). The multi-functional portable power supply 20 can serve as an illuminating device 23. As shown in Fig. 5, a charging port 24 and a consumption socket 25 are also provided on the multi-functional portable power supply 20. A second charging circuit for the portable power supply electrically connected to the charging port 24, and a second consumption circuit for the portable power supply electrically connected to the consumption socket 25, are also provided inside the multi-functional portable power supply 20. The portable power supply can serve as a common multi-functional portable power supply 20 to charge electronic devices such as cell phones and IPADs. The multi-functional portable power supply can be applied for multiple purposes, has multiple functions, and is convenient to use.

As shown in Fig. 4 and Fig. 5 , there are four shoulders 11 in present embodiment, which are arranged at four corners of an end surface of the air compressor body 10, respectively. A protrusion 111 is provided for each shoulder 11; and a stopper 112 is provided at one end of each shoulder 11 for positioning the multi-functional portable power supply 20. A block 21 is provided at the four corners of the multi-functional portable power supply 20 respectively corresponding to the positions of the four shoulders 11, and the multi-functional portable power supply 20 is clamped by the coordination between the blocks 21 and the protrusions 111. The structure is firm in connection and convenient for disassembly.

### Embodiment 4

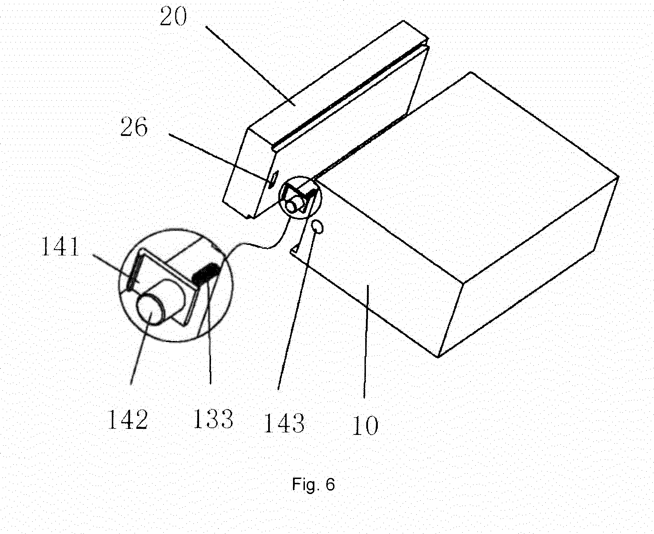

A main technical solution of present embodiment is the same as that of Embodiment 1. Features not explained in present embodiment will refer to those in Embodiment 1, and will not be repeated here. The difference between present embodiment and Embodiment 1 lies in that:
As shown in Fig. 6, the locking mechanism of present embodiment is formed of an L-shaped hook 141, a button 142 and a spring 133 provided inside the air compressor body 10, and an L-shaped groove 26 provided on the bottom of the multi-functional portable power supply 20. A button hole 143 and a hook hole are formed on the air compressor body 10. The button 142 is arranged inside the button hole 143, and the hook penetrates through the hook hole. The button 142 is fixedly connected to a side of the L-shaped hook 141, and the spring 133 is resisted against the other side of the L-shaped hook 141. The hook can be pushed by the spring 133 to move by a distance in the hook hole horizontally. There is a locking site at one side of the hook hole and an unlocking site on the other side. When locking, the button 142 is pressed down, the spring 133 is compressed, the L-shaped hook 141 is located at the unlocking site, and the L-shaped hook 141 is inserted into the L-shaped groove 26; and when the button 142 is released, the spring 133 returns back to its original position, here the L-shaped hook 141 is pushed to reach the locking site, the L-shaped groove 26 is hooked by the L-shaped hook 141, and the multi-functional portable power supply 20 is locked. When unlocking, the above steps are repeated reversely.

Finally, it should be noted that, the foregoing descriptions are merely preferred embodiments of the present application, and are not intended to limit the present application, the scope of protection being defined by the appended claims.

## Claims

1. A portable air compressor comprising an air compressor body (10), an air pump and a motor both provided inside the air compressor body (10) and electrically connected to each other, and a power supply circuit; wherein the portable air compressor further comprises a multi-functional portable start power supply (20) for vehicle batteries; wherein the power supply circuit comprises a circuit for the air compressor body (10), a consumption circuit for the portable power supply and a charging circuit for the portable power supply, with electrical connection structures being provided between the consumption circuit for the portable power supply and the circuit for the air compressor body (10) and between the charging circuit for the portable power supply and the circuit for the air compressor body (10);
wherein the portable power supply (20) is detachable from, and mountable on, the air compressor body (10) such that with the portable power supply mounted on the air compressor body, the consumption circuit for the portable power supply and the charging circuit for the portable power supply are electrically connected to the circuit for the air compressor body (10) by the electrical connection structures, and with the portable power supply (20) removed, the electrical connection structures are disconnected; further **characterised in that** the portable power supply (20) comprises a charging port (24) and a consumption socket (25) which is able to supply power of various voltages and currents.

2. The portable air compressor according to claim 1, wherein the electrical connection structure comprises an elastic anode sheet, an elastic cathode sheet, an anode contact and a cathode contact, the elastic anode sheet being resisted against the anode contact and the elastic cathode sheet being resisted against the cathode contact.

3. The portable air compressor according to claim 2, wherein the air compressor body (10) is a cube in shape, and the portable power supply (20) is arranged at one end portion of the air compressor body.

4. The portable air compressor according to claim 3, wherein the portable power supply (20) and the air compressor body (10) form a slidable clamping structure.

5. The portable air compressor according to claim 4, wherein at least two shoulders (11) are provided oppositely at one end of the air compressor body (10); protrusions (111) are provided at interval on an inner side of the shoulder (11), blocks (21) are provided at interval on the portable power supply (20) correspondingly to the protrusions (111), and the portable power supply (20) is clamped on the air compressor body (10) by the coordination between the blocks (21) and the protrusions (111); and the elastic anode sheet and the elastic cathode sheet are in close contact with the anode contact and the cathode contact, respectively.

6. The portable air compressor according to claim 5, wherein a stopper (112) for limiting the position of the multi-functional portable power supply (20) is provided at one end of the shoulder (11).

7. The portable air compressor according to claim 4, wherein a locking mechanism for locking the portable power supply (20) is also provided on the air compressor body (10).

8. The portable air compressor according to claim 1, wherein an illuminating device (23) is also provided on the portable power supply (20), an encoder knob is provided on the illuminating device (23), and each stage of the encoder knob corresponds to light of different colours and brightness.

9. The portable air compressor according to claim 1, wherein an interface capable of acquiring electricity for a vehicle battery is provided on the portable power supply (20).

10. The portable air compressor according to claim 1, wherein the charging port (24) is a USB charging port, and the consumption socket (25) is a USB consumption socket.

## Patentansprüche

1. Tragbarer Luftkompressor umfassend einen Luftkompressorkorpus (10), eine Luftpumpe und einen Motor, beide im Inneren des Luftkompressorkorpus (10) angeordnet und elektrisch verbunden miteinander, sowie einen Stromversorgungskreis, wobei der tragbare Luftkompressor weiterhin eine multifunktionelle tragbare Startstromversorgung (20) für Fahrzeugbatterien umfasst, wobei der Stromversorgungskreis einen Stromkreis für den Luftkompressorkorpus (10) umfasst, einen Verbrauchsstromkreis für die tragbare Stromversorgung und einen Ladestromkreis für die tragbare Stromversorgung, mit elektrischen Anschlussstrukturen, die zwischen dem Verbrauchsstromkreis für die tragbare Stromversorgung und dem Stromkreis für den Luftkompressorkorpus (10) vorgesehen sind und zwischen dem Ladestromkreis für die tragbare Stromversorgung und dem Stromkreis für den Luftkompressorkorpus (10), wobei die tragbare Startstromversorgung (20) lösbar von und anbringbar an dem Luftkompressorkorpus (10) ist, derart, dass mit an dem Luftkompressorkorpus (10) montierter tragbarer Stromversorgung der Verbrauchsstromkreis für die tragbare Stromversorgung und der Ladestromkreis für die tragbare Stromversorgung durch elektrische Verbindungsstrukturen elektrisch verbunden sind mit dem Stromkreis für den Luftkompressorkorpus (10), und bei entfernter tragbarer Stromversorgung (20) die elektrischen Verbindungsstrukturen unterbrochen sind,
weiterhin **dadurch gekennzeichnet, dass** die tragbare Stromversorgung (20) einen Ladezugang (24) und eine Verbrauchsbuchse umfasst, welche geeignet ist, Strom unterschiedlicher Spannungen und Stromstärken zu liefern.

2. Tragbarer Luftkompressor nach Anspruch 1, bei dem die elektrische Verbindungsstruktur ein elastisches Anodenblech umfasst, ein elastisches Kathodenblech, einen Anodenkontakt und einen Kathodenkontakt, wobei das elastische Anodenblech als Widerstand gegen den Anodenkontakt geschaltet ist und das elastische Kathodenblech als Widerstand gegen den Kathodenkontakt geschaltet ist.

3. Tragbarer Luftkompressor nach Anspruch 2, bei dem der Luftkompressorkorpus (10) in der Form ein Kubus ist und die tragbare Stromversorgung (20) in einem Endbereich des Luftkompressorkorpus angeordnet ist.

4. Tragbarer Luftkompressor nach Anspruch 3, bei dem die tragbare Stromversorgung (20) und der Luftkompressorkorpus (10) eine gleitende Klemmstruktur bilden.

5. Tragbarer Luftkompressor nach Anspruch 4, bei dem wenigstens zwei Schultern (11) gegenüberliegend an einem Ende des Luftkompressorkorpus (10) vorgesehen sind, wobei Vorsprünge (111) in einem Intervall an einer Innenseite der Schulter (11) vorgesehen sind, Blocks (21) in Intervallen an der tragbaren Stromversorgung (20) entsprechend den Vorsprüngen (111) vorgesehen sind und die tragbare Stromversorgung (20) an dem Luftkompressorkorpus (10) angeklemmt ist, durch die Koordination zwischen den Blöcken (21) und den Vorsprüngen (111), und das elastische Anodenblech und das elastische Kathodenblech jeweils in engem Kontakt mit dem Anodenkontakt und dem Kathodenkontakt stehen.

6. Tragbarer Luftkompressor nach Anspruch 5, bei dem ein Stopper (112) für das Begrenzen der Position der multifunktionellen tragbaren Stromversorgung (20) an einem Ende der Schulter (11) vorgesehen ist.

7. Tragbarer Luftkompressor nach Anspruch 4, bei dem ein Verriegelungsmechanismus für das Verriegeln der tragbaren Stromversorgung (20) ebenfalls an dem Luftkompressorkorpus (10) vorgesehen ist.

8. Tragbarer Luftkompressor nach Anspruch 1, bei dem ebenfalls eine Beleuchtungsvorrichtung (23) vorgesehen ist an der tragbaren Stromversorgung (20), ein Kodierungsknopf an der Beleuchtungsvorrichtung (23) vorgesehen ist und jede Stufe des Kodierungsknopfs Licht unterschiedlicher Farben und Helligkeit entspricht.

9. Tragbarer Luftkompressor nach Anspruch 1, bei dem ein Interface, geeignet zur Gewinnung von Elektrizität für eine Fahrzeugbatterie an der tragbaren Stromversorgung (20) vorgesehen ist.

10. Tragbarer Luftkompressor nach Anspruch 1, bei dem der Ladezugang (24) ein USB Ladezugang ist und die Verbrauchsbuchse (25) eine USB Verbrauchsbuchse ist.

## Revendications

1. Compresseur d'air portable comprenant un corps de compresseur d'air (10), une pompe à air et un moteur, tous deux disposés à l'intérieur du corps de compresseur d'air (10) et reliés électriquement l'un à l'autre, et un circuit d'alimentation électrique ; le compresseur d'air portable comprenant en outre une alimentation électrique de démarrage portable multifonctionnelle (20) pour batteries de véhicule ; le circuit d'alimentation électrique comprenant un circuit pour le corps de compresseur d'air (10), un circuit de consommation pour l'alimentation électrique portable, et un circuit de charge pour l'alimentation électrique portable, des structures de raccordement électrique étant prévues entre le circuit de consommation pour l'alimentation électrique portable et le circuit pour le corps de compresseur d'air (10) et entre le circuit de charge pour l'alimentation électrique portable et le circuit pour le corps de compresseur d'air (10) ; l'alimentation électrique portable (20) étant détachable du corps de compresseur d'air (10) et apte à être montée sur celui-ci, de telle sorte que, avec l'alimentation électrique portable montée sur le corps de compresseur d'air, le circuit de consommation pour l'alimentation électrique portable et le circuit de charge pour l'alimentation électrique portable sont reliés électriquement au circuit pour le corps de compresseur d'air (10) par les structures de raccordement électrique, et, avec l'alimentation électrique portable (20) retirée, les structures de raccordement électrique sont déconnectées ; **caractérisé en outre par le fait que** l'alimentation électrique portable (20) comprend un port de charge (24) et une prise de consommation (25) qui est apte à fournir une alimentation de divers courants et diverses tensions.

2. Compresseur d'air portable selon la revendication 1, dans lequel la structure de raccordement électrique comprend une feuille d'anode élastique, une feuille de cathode élastique, un contact d'anode et un contact de cathode, la feuille d'anode élastique résistant contre le contact d'anode et la feuille de cathode élastique résistant contre le contact de cathode.

3. Compresseur d'air portable selon la revendication 2, dans lequel le corps de compresseur d'air (10) a une forme de cube, et l'alimentation électrique portable (20) est disposée à une partie d'extrémité du corps de compresseur d'air.

4. Compresseur d'air portable selon la revendication 3, dans lequel l'alimentation électrique portable (20) et le corps de compresseur d'air (10) forment une structure de serrage pouvant coulisser.

5. Compresseur d'air portable selon la revendication 4, dans lequel au moins deux épaulements (11) sont prévus de manière opposée à une extrémité du corps de compresseur d'air (10) ; des saillies (111) sont prévues à intervalles sur un côté interne de l'épaulement (11), des blocs (21) sont prévus à intervalles sur l'alimentation électrique portable (20) de manière correspondante aux saillies (111), et l'alimentation électrique portable (20) est serrée sur le corps de compresseur d'air (10) par la coordination entre les blocs (21) et les saillies (111) ; et la feuille d'anode élastique et la feuille de cathode élastique sont en contact étroit avec le contact d'anode et le contact de cathode, respectivement.

6. Compresseur d'air portable selon la revendication 5, dans lequel une butée (112) pour limiter la position de l'alimentation électrique portable multifonctionnelle (20) est prévue à une extrémité de l'épaulement (11).

7. Compresseur d'air portable selon la revendication 4, dans lequel un mécanisme de verrouillage pour verrouiller l'alimentation électrique portable (20) est également prévu sur le corps de compresseur d'air (10).

8. Compresseur d'air portable selon la revendication 1, dans lequel un dispositif d'éclairage (23) est également prévu sur l'alimentation électrique portable (20), un bouton encodeur est prévu sur le dispositif d'éclairage (23), et chaque niveau du bouton encodeur correspond à de la lumière de couleurs et luminosités différentes.

9. Compresseur d'air portable selon la revendication 1, dans lequel une interface capable d'acquérir de l'électricité pour une batterie de véhicule est prévue sur l'alimentation électrique portable (20).

10. Compresseur d'air portable selon la revendication 1, dans lequel le port de charge (24) est un port de charge USB, et la prise de consommation (25) est une prise de consommation USB.
